# EUROPEAN PATENT APPLICATION

(11) **EP 0 748 962 A1**
(43) Date of publication of application: **18.12.1996**
(21) Application number: 96109507.2
(22) Date of filing: 13.06.1996
(51) Int. Cl.: F16H 61/36

(54) **Vehicle gearbox control device**

(30) Priority: 16.06.1995 IT TO950505
(71) Applicant: ROLTRA MORSE S.p.A., I-86077 Pozzilli (IT)
(72) Inventor: Bravo, Ernesto, 10020 Cambiano (IT)
(74) Representative: Franzolin, Luigi

(57) **Abstract**

A vehicle gearbox control device (1) presenting a support (2) fitted to a vehicle body element; an intermediate element (4) rotatable in relation to the support (2) about a first axis (A); a control lever (5) fitted to and rotatable in relation to the intermediate element (4) about a pin (24) defining a second axis (B) perpendicular to the first axis (A), to control displacement of a first remote control member (47); and a linkage lever (35) rotatable about a third axis (C) distinct from the first (A) and second (B) axis, to convert rotation of the control lever (5) and the intermediate element (4) about the first axis (A) into displacement of a second remote control member (40); the linkage lever (35) being connected operatively to the control lever (5) and to the intermediate element (4) by the same pin (24) hinging the control lever (5) to the intermediate element (4).

## Description

The present invention relates to a vehicle gearbox control device, or more specifically to a gearshift control device.

Known gearshift control devices substantially comprise a support fitted to a vehicle body element; an intermediate element rotatable in relation to the support about a first axis of rotation; a control lever fitted to and rotatable in relation to the intermediate element about a pin defining a second axis perpendicular to the first axis, to control the movement of a first remote control member; and a linkage lever rotatable about a third axis distinct from the first and second axes, to convert rotation of the control lever and the intermediate element about the first axis into displacement of a second remote control member.

Devices of the type briefly described above normally comprise a relatively large number of components, and are therefore fairly expensive and complex to produce and assemble.

Moreover, since the main components are normally made of metal, the overall weight of the device is considerable.

It is an object of the present invention to provide a gearshift control device designed to overcome the aforementioned drawbacks typically associated with known devices.

According to the present invention, there is provided a vehicle gearbox control device comprising:
a support fitted to the vehicle body;
an intermediate element hinged to said support and rotatable in relation to it about a first axis;
a control lever fitted to said intermediate element and rotatable in relation to it about a pin defining a second axis perpendicular to said first axis;
a first remote control member connected to said control lever, and for transmitting motion to said gearbox in response to rotation of said control lever about said second axis;
a linkage lever hinged to said support about a third axis distinct from said first and second axis;
transmission means interposed between said control lever and said linkage lever, to rotate said linkage lever about said third axis in response to rotation of said control lever and said intermediate element about said first axis; and
a second remote control member connected to said linkage lever, and for transmitting motion to said gearbox in response to rotation of said control lever and said intermediate element about said first axis;
characterized in that said transmission means comprise said pin.

A preferred, non-limiting embodiment of the present invention will be described by way of example with reference to the accompanying drawings, in which:
Figure 1 shows a side view of a gearshift control device in accordance with the teachings of the present invention;
Figure 2 shows a section along line II-II in Figure 1;
Figure 3 shows a partial opposite side view of the Figure 1 device;
Figure 4 shows a top plan view of the Figure 1 device;

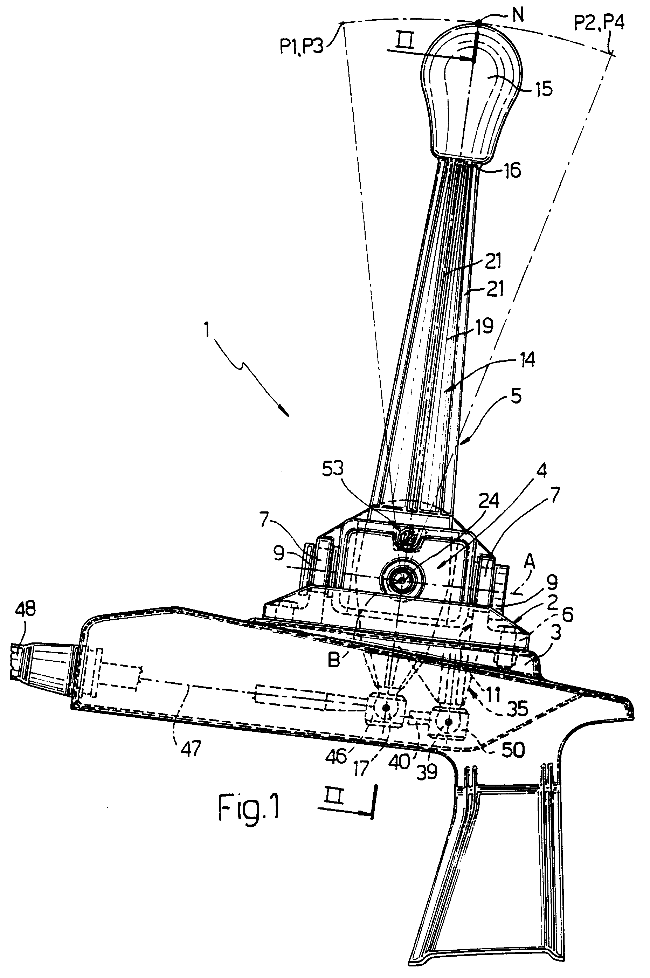

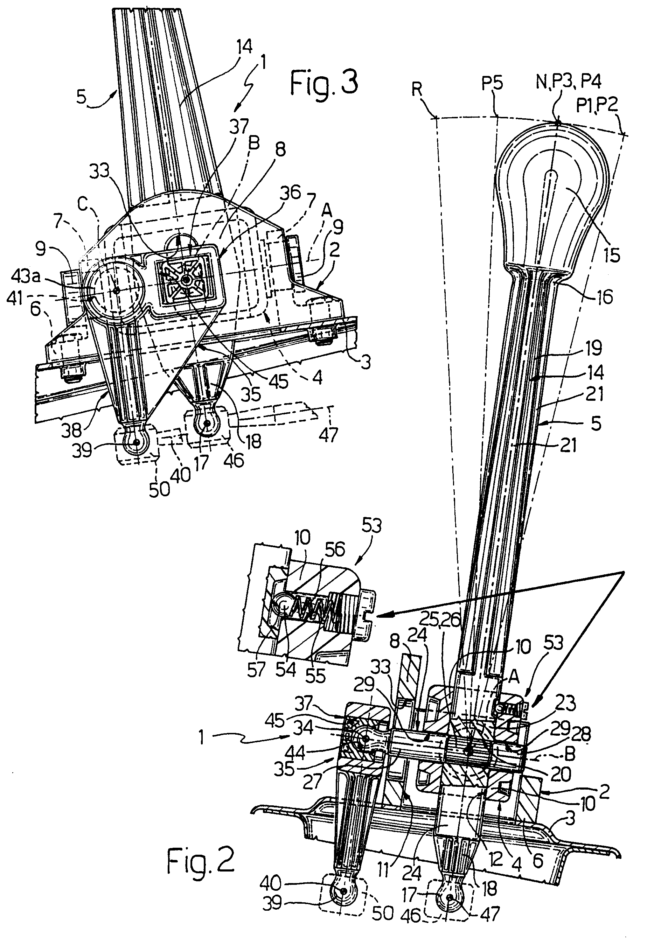

Number 1 in Figures 1 and 2 indicates a control device for a vehicle gearbox (not shown).

Device 1 substantially comprises a fixed support 2 fitted rigidly to a vehicle body element 3; an intermediate element 4 rotatable in relation to support 2 about a first axis A; and a control lever 5 fitted to intermediate element 4 and rotatable in relation to it about a second axis B perpendicular to axis A.

Lever 5 is thus rotatable, in relation to fixed support 2, about axis A (fixed) and axis B (movable with intermediate element 4); axis A is substantially longitudinal in relation to the vehicle, and rotation about it provides for selecting the gears; axis B is crosswise to the vehicle, and rotation about it by lever 5 provides for engaging or disengaging the gears; and operation of lever 5 is transmitted to the gearbox (not shown) by linkage means described later on.

Support 2 presents a substantially frame-like anchoring base 6 defining a central opening 11, and from which respective walls 7 extend upwards from the front and rear sides, and a lateral wall 8 extends upwards from one longitudinal side.

Intermediate element 4 is substantially parallelepiped, and is housed between and hinged to walls 7 by respective end pins 9 of axis A.

Support 2 and intermediate element 4 are conveniently molded from plastic material.

Intermediate element 4 presents a longitudinal through opening 12 perpendicular to axes A and B, defined laterally by two parallel lateral walls 10 of intermediate element 4, and presenting a cross section (in a plane parallel to axes A and B) in the form of an elongated rectangle extending in the direction of axis A.

Lever 5 is molded in one piece from plastic material, and comprises a rod 14 fitted through opening 12 in intermediate element 4; a grip 15 integral with the top end 16 of rod 14; and a spherical articulating head 17 extending from the bottom end 18 of rod 14, and for connecting rod 14 to an engagement control cable 47, as described later on.

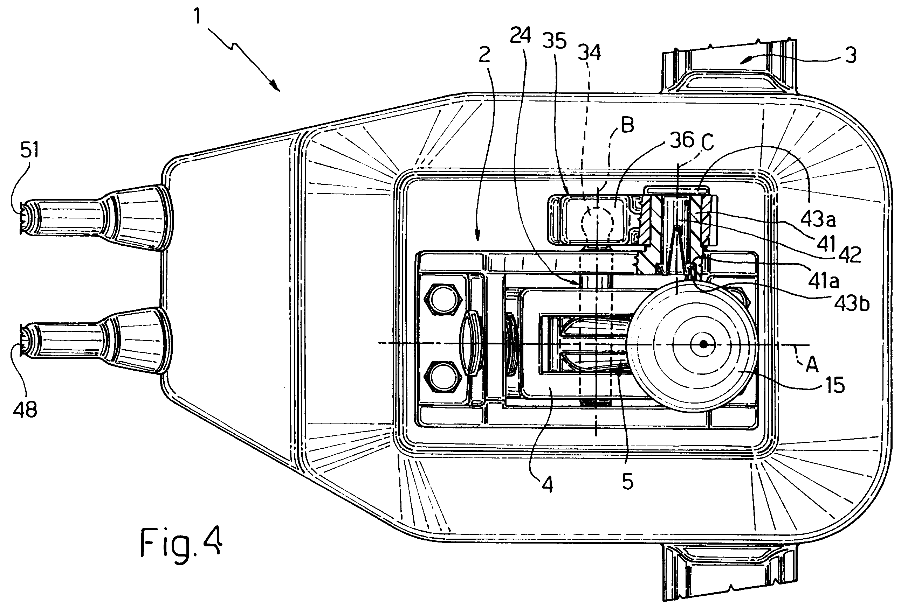

Rod 14 comprises a substantially elliptical-section top portion 19 tapering towards grip 15 and presenting longitudinal cross ribs 21; and a substantially rectangular-section bottom portion 23 housed in sliding manner with a small amount of lateral clearance inside opening 12, and presenting a transverse through hole 20, of axis B, defining a seat for a pin 24 permitting rod 14 to pivot in relation to intermediate element 4 (Figures 2 and 4).

Pin 24 presents an intermediate portion 25 with grooves 26, which is interference fitted inside hole 20 so that it is rigidly connected to lever 5; and axial end portions 27, 28 engaging in radially slack manner respective holes 29, of axis B, formed in the lateral walls 10 of intermediate element 4.

According to the present invention, one (27) of the two axial end portions extends axially outwards of intermediate element 4 and beyond lateral wall 8 of support 2 - which, for the purpose, presents a vertically elongated opening 33 - to form a spherical end head 34 which acts as an articulating element for controlling a linkage lever 35.

Lever 35 is made of plastic material, is substantially square, and is hinged to lateral wall 8 of support 2 to pivot about an axis C (Figure 3) perpendicular to axis A, crosswise to the vehicle, and shifted rearwards in relation to axis B.

More specifically, and as shown clearly in Figure 4, lever 35 is hinged to a pivot defined by a bush 41 projecting integrally outwards from wall 8 of support 2, and is locked axially onto bush 41 by a fast-fit element 42. Element 42 is clicked inside bush 41, and presents a head 43a defining an axial shoulder at one end, and, at the opposite end, hooks 43b which click onto the inner shoulder 41a of bush 41.

Lever 35 presents an arm 36 extending frontwards in a substantially longitudinal direction in relation to the vehicle, and connected to head 34 of pin 24 by an articulating element 37; and an arm 38 extending substantially downwards, and presenting a spherical end head 39 for connection to a gear selection control cable 40 as described later on.

Articulating element 37 comprises a parallelepiped block of plastic material with a low friction coefficient, and presenting a spherical seat 44 cooperating with head 34 of pin 24. Block 37 is housed in sliding manner inside an opening 45 in arm 36, and is permitted to move axially and radially in relation to axis C, but with no tangential slack in relation to it.

Spherical head 17 of lever 5 cooperates in known manner with an articulating element 46 (shown by the dotted line) presenting a complementary spherical seat, and fitted to one end of engagement control cable 47. Cable 47 is a Bowden cable, and presents a sheath 48 with one end fitted to vehicle body element 3 and substantially parallel to axis A.

Similarly, spherical head 39 of linkage lever 35 cooperates with an articulating element 50 (shown by the dotted line in Figures 1, 2, 3) presenting a complementary spherical seat, and fitted to one end of selection control cable 40. Cable 40 is a Bowden cable, and presents a sheath 51 with one end fitted to vehicle body element 3 and also substantially parallel to axis A.

With reference to Figure 2, number 53 indicates a device for stabilizing the relative position of control lever 5 and intermediate element 4. Device 53 substantially comprises a ball 54 housed inside a transverse hole 55 in a lateral wall 10 of intermediate element 4, and pushed by a spring 56 onto lever 5; and a number of impressions 57 formed on lever 5 and so located as to correspond with the neutral and gear engagement positions.

Device 1 operates as follows.

To select a given gear, grip 15 of control lever 5 is shifted laterally (Figure 2) to rotate lever 5, pin 24 integral with lever 5, and intermediate element 4 about axis A; the rotation of pin 24 about axis A crosswise to it produces an upward or downward movement, along an arc of a circle, of spherical head 34 which, via articulating element 37, transmits the movement to linkage lever 35; and lever 35 rotates about axis C to activate relative cable 40 to shift the relative selection members inside the gearbox. The selection positions relative to a five-speed plus reverse gearbox are shown in Figure 2, in which the numbers preceded by the letter P indicate the corresponding gears, N indicates the neutral position, and R the reverse gear.

Once the required selection position is reached, the relative gear is engaged by moving grip 15 of lever 5 forwards or backwards to rotate lever 5 about axis B and so activate cable 47. The neutral and engaged positions shown in Figure 1 using the same references as in Figure 2 are stabilized by device 53.

The advantages of the gearshift control device according to the present invention will be clear from the foregoing description.

In particular, pin 24 performs the dual function of hinging control lever 5 to intermediate element 4, and transmitting rotation of lever 5 about axis B to linkage lever 35, thus reducing the number of components, and hence the manufacturing and assembly cost, of device 1.

Assembly of device 1 is further simplified by fast-fit element 42.

Control lever 5 is molded in one piece from plastic material, and integrally comprises parts which, in known devices, would be made separately and then assembled, e.g. grip 15, spherical head 17 for connection to cable 47, and seat 20 for pin 24.

The present invention therefore provides for simplifying manufacture and assembly, and so reducing overall cost.

Finally, the overall weight of device 1 is reduced by using plastic material for the main parts (control lever 5, support 2, intermediate element 4 and linkage lever 35).

Clearly, changes may be made to device 1 as described and illustrated herein without, however, departing from the scope of the present invention.

## Claims

1. A vehicle gearbox control device (1) comprising:
a support (2) fitted to the vehicle body;
an intermediate element (4) hinged to said support (2) and rotatable in relation to it about a first axis (A);
a control lever (5) fitted to said intermediate element (4) and rotatable in relation to it about a pin (24) defining a second axis (B) perpendicular to said first axis (A);
a first remote control member (47) connected to said control lever (5), and for transmitting motion to said gearbox in response to rotation of said control lever (5) about said second axis (B);
a linkage lever (35) hinged to said support (2) about a third axis (C) distinct from said first (A) and second (B) axis;
transmission means (24, 37) interposed between said control lever (5) and said linkage lever (35), to rotate said linkage lever (35) about said third axis (C) in response to rotation of said control lever (5) and said intermediate element (4) about said first axis (A); and
a second remote control member (40) connected to said linkage lever (35), and for transmitting motion to said gearbox in response to rotation of said control lever (5) and said intermediate element (4) about said first axis (A);
characterized in that said transmission means comprise said pin (24).

2. A device as claimed in Claim 1, characterized in that said linkage lever (35) comprises a first arm (36) connected to said transmission means (24, 37); and a second arm (38) connected to said second remote control member (40).

3. A device as claimed in Claim 1 or 2, characterized in that said transmission means comprise a ball joint (34, 37).

4. A device as claimed in Claim 3, characterized in that said ball joint comprises a first articulating element (34) on said pin (24); and a second articulating element (37) on said linkage lever (35).

5. A device as claimed in Claim 4, characterized in that said pin (24) comprises an intermediate portion (25) rigidly connected to said control lever (5); and a pair of end portions (27, 28) connected in angularly free manner to said intermediate element (4); one (27) of said end portions (27, 28) integrally forming a spherical head (34) defining said first articulating element.

6. A device as claimed in Claim 5, characterized in that said second articulating element comprises a block (37) presenting a corresponding spherical seat (44) for said spherical head (34) of said pin (24), and connected to said first arm (36) of said linkage lever (35) in axially and radially slack manner in relation to said third axis (C).

7. A device as claimed in any one of the foregoing Claims, characterized in that said linkage lever (35) is secured to said support by fast-fit means (42).

8. A device as claimed in Claim 7, characterized in that said linkage lever (35) rotates about a pivot (41) integral with said support (2), and is secured to said pivot (41) by fast-fit means (42).

9. A device as claimed in any one of the foregoing Claims, characterized in that said control lever (5) is molded in one piece from plastic material, and comprises, integrally, a rod (14); a grip (15) integral with the top end (16) of said rod (14); articulating means (20) for connecting said rod (14) in articulated manner to said intermediate element (4); and connecting means for connecting the control lever (5) to said first remote control member (47).

10. A device as claimed in Claim 9, characterized in that said connecting means comprise a spherical articulating element (17) integral with the opposite end (18) of the control lever (5) to said grip (15).

11. A device as claimed in any one of the foregoing Claims, characterized in that said support (2), said intermediate element (4) and said linkage lever (35) are made of plastic material.
